# EUROPEAN PATENT SPECIFICATION

(11) **EP 1 826 445 B1**
(45) Date of publication and mention of the grant of the patent: **03.09.2014**
(21) Application number: 07250577.9
(22) Date of filing: 13.02.2007
(51) Int. Cl.: F16D 48/06, B60W 10/02, B60W 10/06, B60W 30/18, B60W 30/188

(54) **Control device and method for vehicle automatic clutch**
Steuervorrichtung und Steuerverfahren für eine automatische Fahrzeugkupplung
Dispositif et procédé de commande de l'embrayage automatique d'un véhicule

(30) Priority: 23.02.2006 JP 2006047536
(43) Date of publication of application: 29.08.2007
(73) Proprietor: TOYOTA JIDOSHA KABUSHIKI KAISHA, Toyota-shi, Aichi-ken, 471-8571 (JP)
(72) Inventor: Nishizawa, Jun, c/o Toyota Jidosha K.K., Toyota-shi, Aichi-ken 471-8571 (JP)
(74) Representative: Albutt, Anthony John

(56) References cited:
- FR-A1- 2 835 483
- JP-A- 61 271 128
- US-A1- 2002 055 415
- US-A1- 2004 235 618
- US-B1- 6 315 693

## Description

### BACKGROUND OF THE INVENTION

### 1. Field of the Invention

The invention relates generally to a control device and method for a vehicle automatic clutch. More specifically, the invention relates to a technology for preventing engine stalling, which is likely to occur, for example, when a braking operation is suddenly performed, by setting the standby position of the output rod of a clutch actuator to a position that is close to the position, at which the automatic clutch is disengaged, as quickly as possible regardless of the degree to which an engine has been warmed.

### 2. Description of the Related Art

A vehicle is known that includes an automatic clutch which is provided between an engine and a transmission and which is engaged/disengaged by a clutch actuator, instead of a manual friction clutch that is engaged/ disengaged by operating a clutch pedal. Such a vehicle is described in Japanese Patent Application Publication No. JP-A-2002-31159 and Japanese Patent Application Publication No. JP-A-2005-42804.

Vehicles provided with the aforementioned automatic clutch will be described below. Japanese Patent Application Publication No. JP-A-2005-42804 describes a vehicle in which a target clutch torque is calculated based on the difference between the engine speed and the idle speed, using the relationship stored in advance, when the vehicle is started. A clutch actuator is then controlled in a feedback manner so that the target clutch torque is obtained. Japanese Patent Application Publication No. JP-A-2002-31159 describes a vehicle in which, if the engine speed becomes lower than a reference value set lower than the idle speed when a braking operation is performed while an accelerator pedal has been released, the automatic clutch is quickly disengaged by a clutch actuator.

In a vehicle provided with the aforementioned automatic clutch, the operating position, to which the output rod of the clutch actuator that controls the automatic clutch is operated when the vehicle is decelerating, may be set to a position that is close to the position at which the automatic clutch is engaged. Alternatively, a vehicle provided with the automatic clutch may include a control device having standby control means for performing a standby control. In the standby control, the operating position, to which the output rod of the clutch actuator is operated, is set to a standby position at which the automatic clutch does not slip but which is close to the position at which the automatic clutch is disengaged. In the latter case, the automatic clutch is quickly disengaged. Thus, it is possible to prevent engine stalling, i.e., an engine stop, which is likely to occur when a braking operation is suddenly performed on the vehicle.

The standby position of the output rod of the clutch actuator, which is used in the standby control, is set such that the torque transferred by the automatic clutch (i.e. the engagement torque) becomes slightly larger than the absolute value of the torque output from the engine to prevent the clutch from slipping at the torque output from the engine (which is a negative value) when the vehicle is decelerating. However, when the temperature of the engine is low, the difference between the torque output from the engine and zero is increased in the negative direction (the torque is decreased) by a larger amount than when the engine is warm. Even in the case where the difference between the output torque and zero is increased in the negative direction, it is necessary to shift the standby position to the a position close to the position at which the automatic clutch is engaged in order to prevent the automatic clutch from slipping. In this state, the speed, at which the automatic clutch is disengaged, is lower than that when the engine is warm, which may increase the possibility that engine stalling occurs when the braking operation is suddenly performed.

JP 61 271128 relates to a clutch control system

US 2002/0055415 relates to a vehicle starting clutch control device.

This document discloses a similar control device or control method to the one of the invention, in particular it discloses a control method for a vehicle automatic clutch, which performs a standby control where an operating position, to which an output member of a clutch actuator is operated when a vehicle is decelerating, is set to a standby position at which an automatic clutch does not slip but which is close to a position at which the automatic clutch is disengaged, in the vehicle that includes the automatic clutch which is engaged and disengaged by the clutch actuator and which is provided between an engine and a transmission.

### SUMMARY OF THE INVENTION

The invention provide a control device and method for a vehicle automatic clutch, which quickly disengages the automatic clutch when the vehicle is decelerating regardless of the degree to which an engine has been warmed.

A first aspect of the invention relates to a control device for a vehicle automatic clutch. The control device includes standby control means for performing a standby control where the operating position, to which an output member of a clutch actuator is operated when a vehicle is decelerating, is set to the standby position at which the automatic clutch does not slip but which is close to the position at which the automatic clutch is disengaged, in the vehicle that includes the automatic clutch which is engaged and disengaged by the clutch actuator and which is provided between an engine and a constant mesh transmission of parallel shaft type. The control device includes (a) low temperature state determining means configured to determine whether the engine is in a predetermined low temperature state; and (b) engine output torque increasing means configured to increase the torque output from the engine if the low temperature state determining means determines that the engine is in the low temperature state when the standby control means performs the standby control.

With the above configuration, if the low temperature state determining means determines that the engine is in the low temperature state when the standby control means performs the standby control, the engine output torque increasing means increases the torque output from the engine. Accordingly, the standby position when the engine is in the low temperature state is shifted to a position that is close to the position at which the automatic clutch is disengaged. As a result, when the vehicle is decelerating, the automatic clutch is quickly disengaged regardless of the degree to which the engine has been warmed.

The engine output torque increasing means increases the torque output from the engine in the low temperature state to a value that is equal to the torque output from the engine that has been warmed. By this, it is possible to maintain the operating position, to which the output member of the clutch actuator is operated when the vehicle is decelerating, at the standby position regardless of the degree to which the engine has been warmed. As a result, even when the engine is in the low temperature state, the automatic clutch is quickly disengaged, in the same manner as that when the engine has been warmed.

The standby control means maintains the operating position, to which the output member of the clutch actuator is operated when the vehicle is decelerating, at the standby position regardless of the degree to which the engine has been warmed. It is, thus, possible to quickly disengage the automatic clutch regardless of the degree to which the engine has been warmed.

The engine may include a fuel injection valve. The engine output torque increasing means may increase the amount of fuel supplied from the fuel injection valve to the engine to a value that is larger than the value required to cause the engine to run at idle.

The vehicle may include a throttle valve. The engine output torque increasing means may increase the opening amount of the throttle valve in the low temperature state to a value that is larger than the opening amount of the throttle valve when the engine has been warmed.

The clutch actuator may be provided with an electric motor that drives the output member via a speed reducer. This is advantageous compared to the case where the clutch actuator is composed of a hydraulic cylinder, because it is not necessary to provide hydraulic equipment used in the control of the automatic clutch, such as a control valve, a hydraulic circuit, and a hydraulic pump.

The clutch actuator may include one of an air pressure cylinder and a hydraulic cylinder that drive the output member via a speed reducer. This leads to utilization of existing equipment.

A second aspect of the invention relates to a control method for a vehicle automatic clutch, which performs a standby control where the operating position, to which the output member of a clutch actuator is operated when a vehicle is decelerating, to the standby position at which an automatic clutch does not slip but which is close to a position at which the automatic clutch is disengaged, in the vehicle including the automatic clutch which is engaged and disengaged by the clutch actuator and which is provided between an engine and a transmission. According to the control method, whether the engine is in a predetermined low temperature state is determined. If it is determined that the engine is in the low temperature state when the standby control is performed, the torque output from the engine is increased. The torque output from the engine is increased in the low temperature state to a valve that is equal to a torque output from the engine that has been warmed. The method further includes maintaining the operating position to which the output member of the clutch actuator is operated when the vehicle is decelerating, at the standby position regardless of a degree to which the engine has been warmed.

### BRIEF DESCRIPTION OF THE DRAWINGS

The foregoing and further objects, features and advantages of the invention will become apparent from the following description of an example embodiment with reference to the accompanying drawings, wherein like numerals are used to represent like elements and wherein:
FIG. 1 is the schematic diagram showing the structure of a vehicle drive unit provided with a control device for an automatic clutch according to an embodiment of the invention;
FIG. 2 is the diagram illustrating one example of the automatic clutch of the vehicle drive unit shown in FIG. 1;
FIG. 3 is the block diagram explaining a control system of the vehicle drive unit shown in FIG. 1;
FIG. 4 is the perspective view illustrating a shift lever provided in the vehicle in FIG. 1 and the operating positions thereof;
FIG. 5 is the functional block diagram explaining the main functions of an electronic control unit shown in FIG. 3;
FIG. 6 is the graph showing the relationship between the torque output from the engine and the engine speed when an accelerator pedal has been released;
FIG. 7 is the graph showing the relationship between the torque transferred by the automatic clutch shown in FIG. 2 and the clutch operation-amount; and
FIG. 8 is the flowchart explaining the main control operations performed by the electronic control unit shown in FIG. 3.

### DETAILED DESCRIPTION OF THE EXAMPLE EMBODIMENT

Hereinafter, an embodiment of the invention will be described in detail with reference the accompanying drawings.

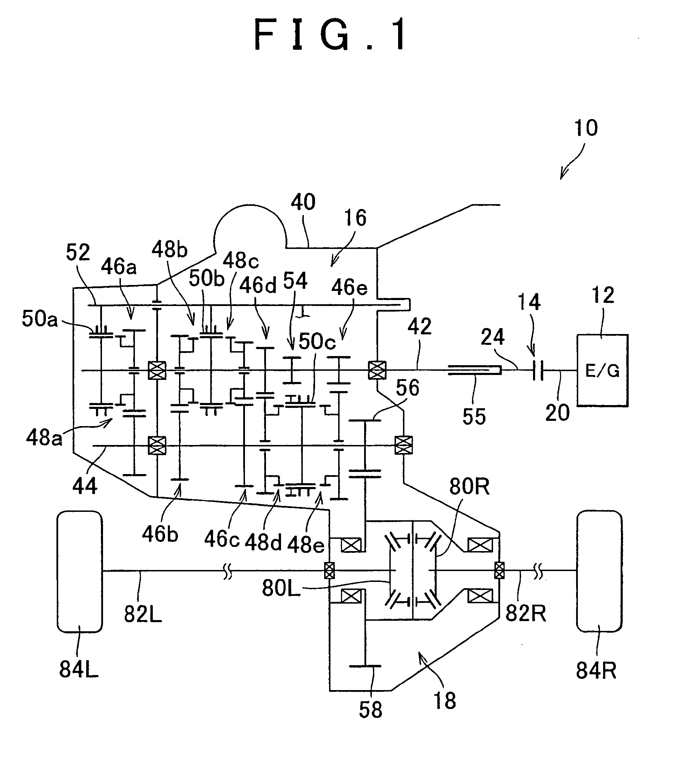

FIG. 1 is the schematic diagram showing the structure of a drive unit 10 for a vehicle according to the embodiment of the invention. FIG. 1 shows the drive unit 10 for a front engine and front drive (FF) vehicle. The drive unit 10 for a vehicle (hereinafter, referred to as the "vehicle drive unit 10") includes an engine 12 that serves as a drive source for propelling the vehicle, an automatic clutch 14, a transmission 16, and a differential gear unit 18. The output from the engine 12 is transferred to drive wheels 84L, 84R via the automatic clutch 14, the transmission 16, and the differential gear unit 18.

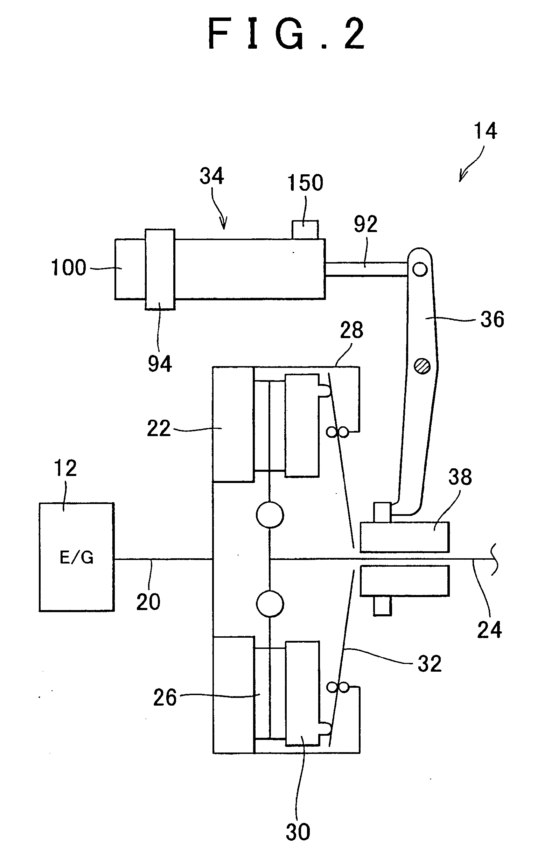

The automatic clutch 14 is, for example, a dry-type single-plate friction clutch shown in FIG 2. The automatic clutch 14 includes a flywheel 22, a clutch disc 26, a pressure plate 30, a diaphragm spring 32, and a release sleeve 38. The flywheel 22 is attached to a crankshaft 20 of the engine 12. The clutch disc 26 is disposed on a clutch output shaft 24. The pressure plate 30 is disposed in a clutch housing 28. The diaphragm spring 32 applies a force to the pressure plate 30 so that the pressure plate 30 moves toward the flywheel 22. As a result, the clutch disc 26 arranged between the pressure plate 30 and the flywheel 22 is pressed to the flywheel 22 by the pressure plate 30, whereby the power from the engine 12 is transferred to the clutch output shaft 24. The release sleeve 38 is moved, leftward in FIG. 2, by a clutch actuator 34 via a release fork 36. This movement of the release sleeve 38 displaces the inner end portion of the diaphragm spring 32 leftward in FIG 2 so as to disengage (or release) the clutch.

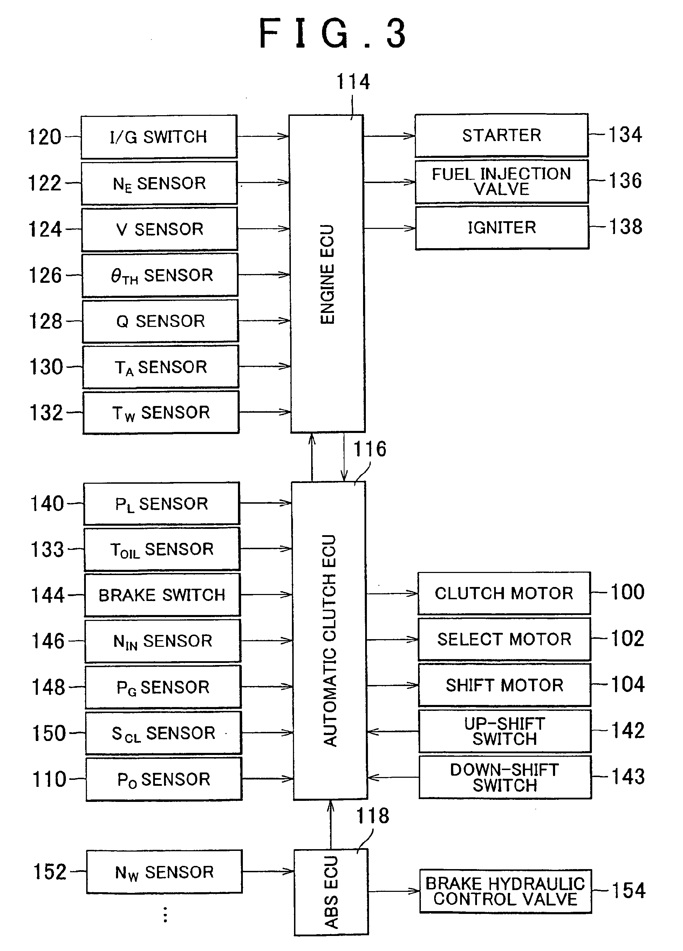

The clutch actuator 34 is provided with a clutch motor 100, and a speed reducer 94 that reduces the rotational speed of the clutch motor 100 and transmits the reduced speed to an output rod 92. The clutch motor 100 is driven based on a command issued from an electronic control unit 116 for an automatic clutch (hereinafter, simply referred to as an "automatic clutch ECU 116"), which is shown in FIG 3 and to be described later in detail. Thus, the inner end portion of the diaphragm spring 32 is displaced, whereby the automatic clutch 14 is engaged or disengaged. The clutch actuator 34 is provided with a clutch operation-amount sensor 150, which is a sensor that detects the amount by which the output rod 92 has been operated. The clutch operation-amount sensor 150 is composed, for example, of a rotary encoder.

Referring again to FIG 1, the transmission 16 is disposed in a housing 40 together with the differential gear unit 18 to form a transaxle. The lubricating oil is supplied into the housing 40 in a predetermined amount sufficient to lubricate the transmission 16 and the differential unit 18. The transmission 16 is a constant-mesh transmission of a parallel shaft type, which is structured like a well-known manual transmission. The constant-mesh transmission of the parallel shaft type according to the embodiment includes a two-shaft constant mesh speed change mechanism, fork shafts 52, and a shift/select shaft (not shown). (a) The two-shaft constant mesh speed change mechanism includes a plurality of gear sets 46a to 46e having different gear ratios, which is provided between an input shaft 42 and an output shaft 44 that are parallel to each other. Further, the two-shaft constant mesh speed change mechanism is provided with a plurality of mesh clutches 48a to 48e of a synchromesh type. The mesh clutches 48a to 48e correspond to the gear sets 46a to 46e, respectively. (b) The fork shafts 52 are engaged with three clutch hub sleeves 50a, 50b, 50c of the mesh clutches 48a to 48e, respectively. The fork shafts 52 moves the clutch hub sleeves 50a, 50b, 50c in the axial direction, whereby a desired gear is selected. Note that, there are three fork shafts 52 in the embodiment (although, only one is illustrated in FIG. 1). (c) The shift/select shaft is moved around the axis by a select motor 102 in response to a select operation of a shift lever 160. As a result, the shift/select shaft is engaged with one fork shaft 52 selected from among the three fork shafts 52. Further, the shift/select shaft is moved by a shift motor 104, in response to a shifting operation of the shift lever 160, in the shift direction that is substantially perpendicular to the select direction. In this embodiment, the shift/select shaft is moved in the direction in parallel with the axial direction. In this manner, one of the fork shafts 52 is moved in the axial direction, whereby a desired gear is selected from among five forward gears. The input shaft 42 and the output shaft 44 are provided with a reverse gear set 54. The reverse gear set 54 is meshed with a reverse idle gear fitted to a countershaft (not shown), whereby the reverse gear is selected. Note that the input shaft 42 is connected to the clutch output shaft 24 of the automatic clutch 14 by a spline engagement portion 55. The output shaft 44 is provided with an output gear 56. The output gear 56 is in mesh with a ring gear 58 of the differential gear unit 18. FIG 1 is a development view in which the axes of the input shaft 42, the output shaft 44, and the ring gear 58 are all shown in the same plane.

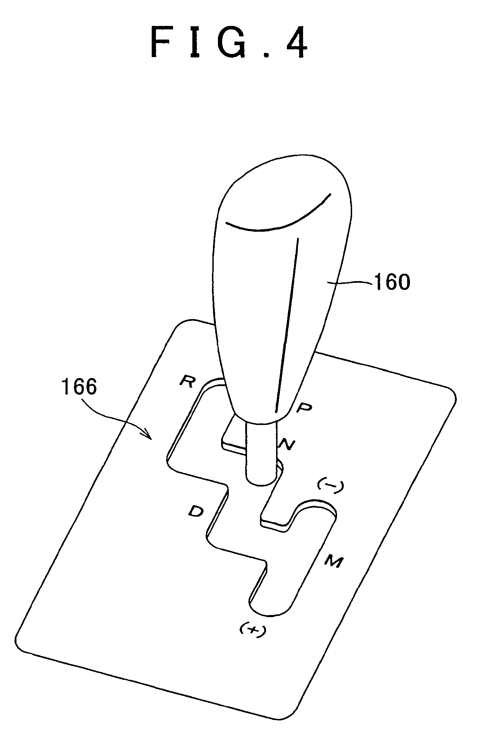

The shift lever 160 is provided next to the driver's seat. FIG. 4 illustrates a shift pattern 166 showing the operating positions of the shift lever 160. A shift lever (P_{L}) sensor 140 detects the operating position of the shift lever 160, i.e., P position, R position, N position, D position, or M position. The P position, R position, N position, and D position are well known. The shift lever 160 is shifted to the M position to set a manual shift mode. After the shift lever 160 is shifted to the M position, it is then shifted to the + position or the - position to perform a manual shifting operation. The manual shifting operation is detected by an up-shift switch 142 and a down-shift switch 143, which are automatic return switches.

Referring again to FIG. 1, the differential gear unit 18 is of a bevel gear type. Drive shafts 82 R, 82L are connected to side gears 80R, 80L, respectively, by means of spline engagement or the like, thereby driving right and left front wheels (drive wheels) 84R, 84L.

FIG 3 is the block diagram explaining an electronic control system of the vehicle drive unit 10 according to the embodiment of the invention. The vehicle drive unit 10 includes an electronic control unit (ECU) 114 for an engine (hereinafter, simply referred to as an "engine ECU 114"), the automatic clutch ECU 116, and an electronic control system 118 for an antilock brake system (ABS) (hereinafter, simply referred to as an ABS ECU 118"). These electronic control units 114, 116, and 118 exchange necessary information with each other. Each of the electronic control units 114, 116 and 118 includes a microcomputer, and processes signals according to programs pre-stored in ROM while using a temporary storage function of RAM. The engine ECU 114 is connected to an ignition switch 120, an engine speed (N_{E}) sensor 122, a vehicle speed (V) sensor 124, a throttle valve opening amount (θ_{TH}) sensor 126, an intake air amount (Q) sensor 128, an intake air temperature (T_{A}) sensor 130, an engine coolant temperature (T_{W}) sensor 132, etc. The ignition switch 120, the engine speed sensor 122, the vehicle speed sensor 124, the throttle valve opening amount sensor 126, the intake air amount sensor 128, the intake air temperature sensor 130, and the engine coolant temperature sensor 132 transmit signals indicating the operating position of the ignition switch 120; the engine speed N_{E}; the vehicle speed V (which corresponds to the rotational speed NOUT of the output shaft 44); the throttle valve opening amount θ_{TH}; the intake air amount Q; the intake air temperature (outside air temperature) T_{A}; and the engine coolant temperature T_{W}, respectively, to the engine ECU 114. According to these signals, the engine ECU 114 drives a starter (electric motor) 134 to start the engine 12, controls the amount of fuel injected from a fuel injection valve 136 and the time at which the fuel is injected from the fuel injection valve 136, and controls the time at which a spark plug ignites the fuel using an igniter 138. The ignition switch 120 is operated to the "ON" position or the "START" position. When the ignition switch 120 is operated to the "START" position, the engine ECU 114 activates the starter 134 to start the engine 12.

The automatic clutch ECU 116 is connected to a shift lever (P_{L}) sensor 140, an oil temperature sensor 133, a brake switch 144, an input rotational speed (N_{IN}: the rotational speed of the input shaft 42) sensor 146, a gear (P_{G}) sensor 148, a clutch operation-amount (S_{CL}) sensor 150, a hydraulic pressure (P_{O}) sensor 110, the up-shift switch 142, the down-shift switch 143, etc. The shift lever sensor 140, the oil temperature sensor 133, the brake switch 144, the input rotational speed sensor 146, the gear sensor 148, the clutch operation-amount sensor 150, the hydraulic pressure sensor 110, the up-shift switch 142, and the down-shift switch 143 transmit signals indicating whether the shift lever 160 has been operated; whether the brake has been applied or released; the input rotational speed N_{IN}; the gear position P_{G} that is the gear selected in the transmission 16; the operation amount of the automatic clutch 14, i.e., the amount by which the output rod 92 of the clutch actuator 34 has been operated (clutch operation-amount); the hydraulic pressure P_{O}; etc., as well as an ON signal indicating that one of the gears has been selected and an OFF signal indicating that any gears have not been selected, respectively. The automatic clutch ECU 116 receives these signals, as well as other necessary signals from the engine ECU 114 and the ABS ECU 118, and controls, based on the received signals, disengagement/engagement of the automatic clutch 14 when the transmission 16 automatically shifts gears. Further, in order to quickly disengage the automatic clutch 14 when the vehicle is decelerating, the automatic clutch ECU 116 performs a disengagement standby control, and the like. In the disengagement standby control, the output rod 92 of the clutch actuator 34 is kept at a position immediately before the position at which the automatic clutch 14 slips.

The ABS ECU 118 receives signals indicating wheel speeds N_{W} from wheel speed (N_{W}) sensors 152 provided in four wheels. The ABS ECU 118 determines whether a skid will occur by comparing the wheel speeds N_{W} to each other, and controls a brake hydraulic control valve 154 so as to control the brake hydraulic pressure of each wheel, thereby suppressing occurrence of a skid.

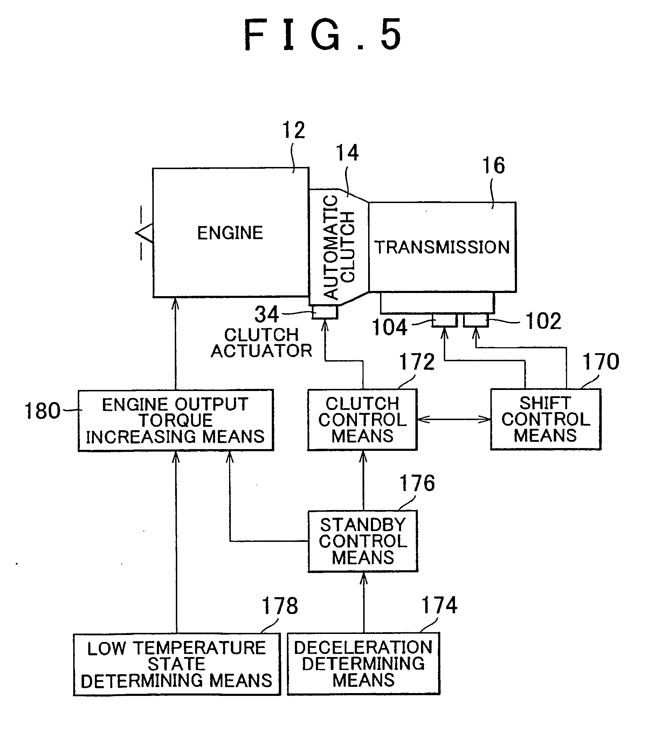

FIG 5 is the functional block diagram explaining the main functions of the automatic clutch ECU 116. More specifically, FIG 5 is the functional block diagram explaining the function of the automatic clutch ECU 116, for controlling disengagement of the automatic clutch 14 when the vehicle is decelerating. With reference to FIG 5, in the automatic shift mode where the shift lever 160 is at the D position, shift control means 170 determines whether the shifting operation needs to be performed, based on the actual vehicle speed and the actual throttle valve opening amount, using a pre-stored shift diagram. When determining that the shifting operation needs to be performed, the shift control means 170 executes a series of shifting operations. More specifically, first, the automatic clutch 14 is disengaged by the clutch actuator 34 if it is determined that the shifting operation needs to be performed. After that, the shift motor 104 and the select motor 102 are driven to shift gears of the transmission 16. Then, the automatic clutch 14 is engaged by the clutch actuator 34. In this manner, the shifting operation is automatically performed. On the other hand, in the manual shift mode where the shift lever 160 is at the M position, the shifting operation is performed in response to the up-shifting operation of the shift lever 160 detected by the up-shift switch 142 or the down-shifting operation of the shift lever 160 detected by the down-shift switch 143. More specifically, first, the automatic clutch 14 is disengaged by the clutch actuator 34. After that, the shift motor 104 and the select motor 102 are driven to shift gears of the transmission 16. Then, the automatic clutch 14 is engaged by the clutch actuator 34. In this manner, the shifting operation is manually performed.

Clutch control means 172 disengages the automatic clutch 14 as described above according to the command from the shift control means 170, in order to interrupt power transfer between the engine 12 and the input shaft 42 while the shifting operation of the is performed in the transmission 16. Further, the clutch control means 172 keeps the automatic clutch 14 in a standby state, i.e., in a state immediately before the automatic clutch 14 slips, according to a command from stand-by control means 176. Thus, a response of the automatic clutch 14 to a command to disengage the automatic clutch 14 is enhanced, and, consequently, engine stalling is prevented when the vehicle is decelerating.

Deceleration determination means 174 determines whether the vehicle is decelerating. Whether the vehicle is decelerating is determined based, for example, on whether a throttle valve opening amount θ (%) or an accelerator pedal operation amount A (%) becomes lower than a reference value H, which is set to a small value, i.e., a value from 1 to 2 (%). The reference value H is used to determine whether the driver intends to decelerate the vehicle based on whether the accelerator pedal operation amount A becomes approximately zero.

The standby control means 176 performs a disengagement standby control on the automatic clutch 14, when the deceleration determination means 174 determines that the vehicle is decelerating. For example, the standby control means 176 shifts a clutch operation-amount L_{CL,} by which the automatic clutch 14 is operated, corresponding to the amount, by which the output rod 92 of the clutch actuator 34 is operated, from the maximum operation-amount, which is achieved when the output rod 92 is operated to the fullest extent, to the operation-amount that is achieved when output rod 92 is operated to a predetermined standby position L₁, thereby keeping the automatic clutch 14 in the standby state, i.e., the state immediately before the automatic clutch 14 slips.

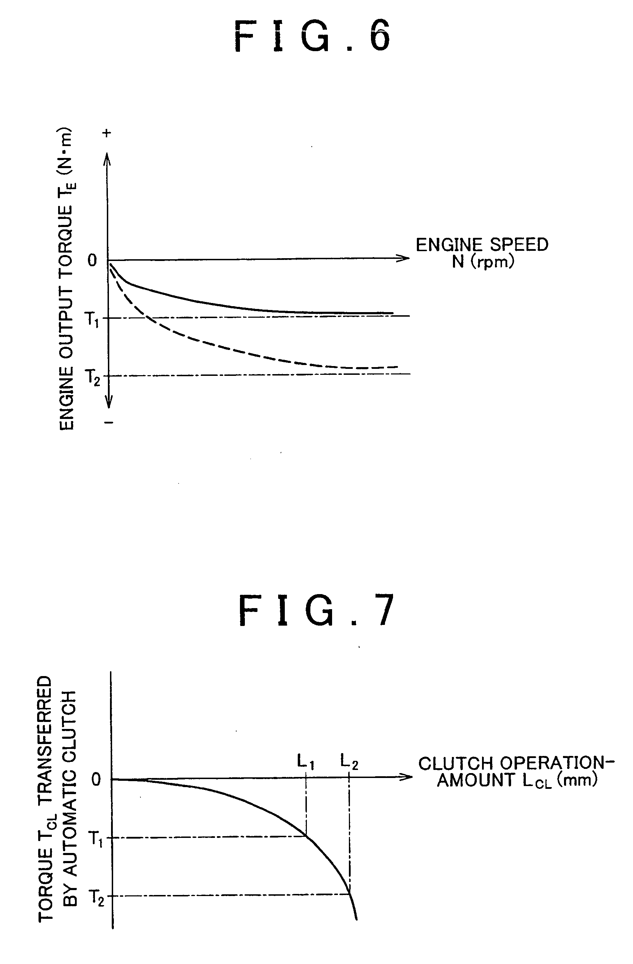

In a deceleration state where the throttle valve opening amount θ (%) or the fuel injection amount is approximately zero, as the engine speed N_{E} (rpm) increases, the resistance of the engine 12 to rotation increases, whereby the difference between an engine output torque T_{E} (Nm) and zero is increased in the negative direction (i.e., the engine output torque T_{E} (Nm) is decreased) as shown in FIG 6. As shown in FIG 7, as the clutch operation-amount L_{CL} increases, the transferred torque T_{CL}, which is transferred by the automatic clutch 14, increases. The aforementioned standby position L₁ is set such that the torque transferred by the automatic clutch 14 is slightly larger than the engine output torque T_{E}. Therefore, when the vehicle is decelerating, the automatic clutch 14 is prevented from slipping even at the engine output torque T_{E} (which is a negative value) generated in the above manner.

When the temperature of the engine 12 is low, as shown by the broken line in FIG 6, the difference between the engine output torque T_{E} (Nm) and zero is increased by a larger amount in the negative direction (i.e. the engine output torque T_{E} (Nm) is decreased by a larger amount). In this case, if the clutch operation-amount L_{CL} of the automatic clutch 14 is set to the clutch operation-amount, which is achieved when the output rod 92 is operated to the standby position L₁, the automatic clutch 14 slips. Therefore, a standby position L₂, which is set such that the torque transferred by the automatic clutch 14 is slightly larger than the engine output torque T_{E} that is obtained when the engine operates at a low temperature, is used. In this case, however, there is a problem that the distance from the standby position L₂ to the position at which the automatic clutch 14 is disengaged becomes longer than the distance from the standby position L₁ to the position at which the automatic clutch 14 is disengaged, whereby the response of the automatic clutch 14 to a command to disengage the automatic clutch 14 deteriorates. To address this, in the embodiment of the invention, low temperature state determining means 178 and engine output torque increasing means 180, to be described below, are provided.

The low temperature state determining means 178 determines whether the engine 12 is in a predetermined low temperature state. Such a determination is made based on whether the coolant temperature T_{W} detected by the engine coolant temperature sensor 132 is lower than a reference value T_{W1} preset to, for example, approximately 10°C. The engine output torque increasing means 180 increases the torque output from the engine 12, when the low temperature state determining means 178 determines that the engine 12 is in the predetermined low temperature state. The torque output from the engine 12 is increased, for example, by correcting the amount of fuel supplied from the fuel injection valve 136 to the engine 12 to a value larger than that required to cause the engine 12 to run at idle while the vehicle is decelerating. Preferably, the fuel injection amount is increased so that the engine 12 outputs a torque equal to the engine output torque T_{E}, shown by the solid line in FIG. 6, which is obtained when the engine 12 is warm. As a result, the standby control means 176 maintains the operating position, to which the output rod 92 of the clutch actuator 34 is operated when the vehicle is decelerating, at the standby position L₁, regardless of the degree to which the engine 12 has been warmed.

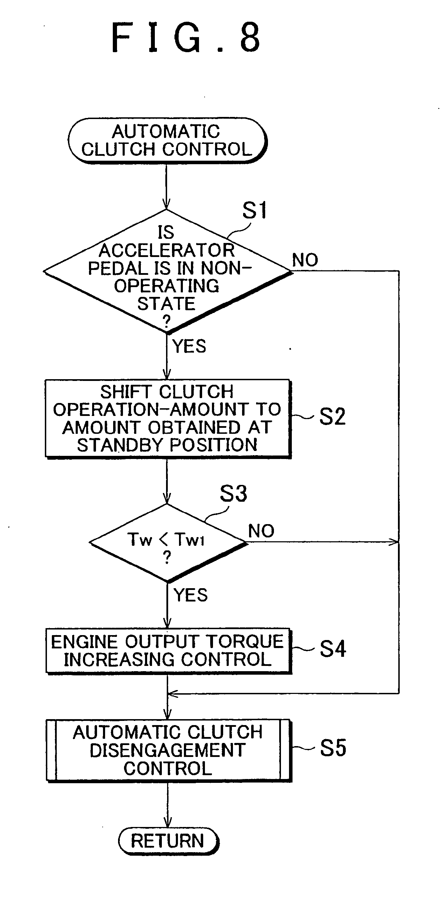

FIG. 8 is the flowchart explaining main control operations performed by the automatic clutch ECU 116. More specifically, FIG 8 is the flowchart explaining the operation for controlling disengagement of the automatic clutch 14 when the vehicle is decelerating. In FIG. 8, in step (hereinafter, "step" is omitted) S1 corresponding to the deceleration determination means 174, it is determined whether the vehicle is decelerating. The determination in S1 is made based on whether an accelerator pedal is at the non-operating position, that is, whether the throttle valve opening amount θ_{TH} detected by the throttle valve opening amount sensor 126 is approximately 0 %. When a negative determination is made in S1, the normal clutch disengagement control is performed in S5. On the other hand, when the an affirmative determination is made in S1, in S2 that corresponds to the standby control means 176, the operating position, to which the output rod 92 of the clutch actuator 34 is operated, is shifted from the position, which is reached when the output rod 92 is operated to the fullest extent, to the standby position L₁.

Next, in S3 that corresponds to the low temperature state determining means 178, it is determined whether the engine 12 is in the low temperature state. The determination in S3 is made based on whether the coolant temperature T_{W} detected by the engine coolant temperature sensor 132 is lower than the predetermined reference value T_{W1}. When a negative determination is made in S3, the normal clutch disengagement control performed is performed in S5. On the other hand, when an affirmative determination is made in S3, in S4 that corresponds to the engine output torque increasing means 180, the torque output from the engine 12 is increased. For example, the torque output from the engine 12 is increased by correcting the amount of fuel supplied from the fuel injection valve 136 to the engine 12 to a value that is larger than that required to cause the engine 12 to run at idle when the vehicle is decelerating. The torque output from the engine 12 is increased, for example, from the value shown by the broken line in FIG. 6 to the value shown by the solid line in FIG. 6.

As described above, according to the embodiment of the invention, the engine output torque increasing means 180 (S4) increases an output torque T_{E} (which is a negative value) output from the engine 12 toward zero, if the low temperature state determining means 178 (S3) determines that the engine 12 is in the low temperature state when the standby control means 176 (S2) performs the standby control. Thus, the standby position used when the engine 12 is in the low temperature state is shifted from the standby position L₂ to the standby position L₁ which is closer to the position at which the automatic clutch 14 is disengaged. As a result, the automatic clutch 14 is quickly disengaged when the vehicle is decelerating regardless of the degree to which the engine 12 has been warmed.

According to the embodiment of the invention, the engine output torque increasing means 180 (S4) increases the output torque T_{E} (which is a negative value) from the engine 12 in the low temperature state toward zero so that the output torque T_{E} becomes equal to the torque output from the engine 12 which has been warmed (which is denoted by the solid line in FIG. 6). Hence, it is possible to maintain the operating position, to which the output rod 92 of the clutch actuator 34 is operated when the vehicle is decelerating, at the standby position L₁, regardless of the degree to which the engine 12 has been warmed. As a result, as in the case where the engine 12 is warm, it is possible to quickly disengage the automatic clutch 14.

According to the embodiment of the invention, the standby control means 176 (S2) maintains the operating position, to which the output rod 93 of the clutch actuator 34 is operated when the vehicle is decelerating, at the standby position L₁ regardless of the degree to which the engine 12 has been warmed. As a result, it is possible to quickly disengage the automatic clutch 14 regardless of the degree to which the engine 12 has been warmed.

According to the embodiment of the invention, the clutch actuator 34 is provided with a clutch motor (electric motor) 100. The clutch motor 100 drives, via the speed reducer 94, the output rod 92. The output rod 92 is indirectly connected to the inner end of the diaphragm spring 32 so that the diaphragm spring 32 is operated in accordance with the operation of the output rod 92. This is advantageous compared to the case where the clutch actuator is composed of a hydraulic cylinder, because it is not necessary to provide hydraulic equipment used to control the automatic clutch, such as a control valve, a hydraulic circuit, and a hydraulic pump.

Although the embodiment of the invention has been described in detail with reference to the accompanying drawings, the invention may be realized in other embodiments.

For example, the clutch actuator 34 according to the embodiment uses the clutch motor 100. However, the clutch actuator 34 may be an air pressure cylinder, a hydraulic cylinder, or the like.

The engine output torque increasing means 180 according to the embodiment of the invention increases the engine output torque T_{E} by increasing the fuel injection amount. However, the engine output torque increasing means 180 may increase the engine output torque T_{E} by increasing the throttle valve opening amount θ_{TH} or the intake air amount.

The engine output torque increasing means 180 according to the embodiment of the invention increases the torque output from the engine 12 in the low temperature state to a value that is equal to the torque output from the engine 12 which has been warmed, that is, increases the torque output from the engine 12 in the low temperature state shown by the broken line in FIG 6 to the value shown by the solid line in FIG. 6. However, it is not necessarily required to increase the torque output from the engine 12 in the low temperature state to the value shown by the solid line in FIG. 6. If the fuel injection amount is increased, the standby position is shifted from the standby position L₂ to the standby position L₁ corresponding to the increase in the torque output from the engine 12, whereby a certain effect can be obtained.

Further, the standby control means 176 according to the embodiment of the invention maintains the operating position, to which the output rod 92 of the clutch actuator 34 is operated when the vehicle is decelerating, at the standby position L₁, regardless of the degree to which the engine 12 has been warmed. However, the operating position, to which the output rod 92 of the clutch actuator 34 is operated in the low temperature state, need not be the same as that when the engine 12 has been warmed.

The transmission 14 according to the embodiment of the invention is structured to be mounted in a FF vehicle. However, the transmission 14 may be mounted, for example, in a front engine and rear drive (FR) vehicle.

The engine 12 according to the embodiment of the invention, used as a drive source for propelling the vehicle, may be, of course, a gasoline engine or a diesel engine. Alternatively, other drive sources, such as an electric motor, may be employed. As the transmission 16, a two-shaft constant mesh transmission which includes a plurality of gear sets having different gear ratios, and a plurality of mesh clutches. The gear sets correspond to the respective mesh clutches, and the gear sets and the mesh clutches are arranged between the two shafts. However, the transmission 16 may be a planetary gear type automatic transmission, or a continuously variable transmission.

While the invention has been described with reference to what are considered to be example embodiment thereof, it is to be understood that the invention is not limited to the disclosed embodiment or constructions but to the scope of the appended claims.

## Claims

1. A control device (116) for a vehicle automatic clutch, which includes standby control means (176) configured to perform a standby control where an operating position, to which an output member (92) of a clutch actuator (34) is operated when a vehicle is decelerating, is set to a standby position at which an automatic clutch (14) does not slip but which is close to a position at which the automatic clutch (14) is disengaged, in the vehicle that includes the automatic clutch (14) which is engaged and disengaged by the clutch actuator (34) and which is provided between an engine (12) and a constant-mesh transmission of a parallel shaft type (16), comprising:
low temperature state determining means (178) configured to determine whether the engine is in a predetermined low temperature state; and
engine output torque increasing means (180) configured to increase a torque output from the engine if the low temperature state determining means determines that the engine is in the low temperature state when the standby control means performs the standby control wherein in use
the engine output torque increasing means increases the torque output from the engine in the low temperature state to a value that is equal to a torque output from the engine that has been warmed; and wherein in use
the standby control means maintains the operating position, to which the output member (92) of the clutch actuator is operated when the vehicle is decelerating, at the standby position regardless of a degree to which the engine has been warmed.

2. The control device for a vehicle automatic clutch according to claim 1, wherein
the engine includes a fuel injection valve, and
the engine output torque increasing means increases an amount of fuel supplied from the fuel injection valve to the engine to a value that is larger than a value required to cause the engine to run at idle.

3. The control device for a vehicle automatic clutch according to claim 1., wherein
the vehicle includes a throttle valve, and
the engine output torque increasing means increases an opening amount of the throttle valve in the low temperature state to a value that is larger than an opening amount of the throttle valve when the engine has been warmed.

4. A control method for a vehicle automatic clutch, which performs a standby control where an operating position, to which an output member (92) of a clutch actuator (34) is operated when a vehicle is decelerating, is set to a standby position at which an automatic clutch (14) does not slip but which is close to a position at which the automatic clutch is disengaged, in the vehicle that includes the automatic clutch (14) which is engaged and disengaged by the clutch actuator (34) and which is provided between an engine (12) and a constant-mesh transmission of a parallel shaft type (16), comprising the steps of:
determining whether the engine is in a predetermined low temperature state; and increasing a torque output from the engine if it is determined that the engine is in the low temperature state when the standby control is performed,
wherein
the torque output from the engine is increased in the low temperature state to a value that is equal to a torque output from the engine that has been warmed; the method further comprising the step of:
maintaining the operating position, to which the output member of the clutch actuator is operated when the vehicle is decelerating, at the standby position regardless of a degree to which the engine has been warmed.

## Patentansprüche

1. Steuereinrichtung (116) für eine automatische Fahrzeugkupplung, die ein Standby-Steuermittel (176) beinhaltet, das so konfiguriert ist, dass es eine Standby-Steuerung durchführt, wobei eine Betriebsposition, bei der ein Ausgabeelement (92) eines Kupplungsantriebs (34) betrieben wird, wenn ein Fahrzeug langsamer wird, auf eine Standby-Position eingestellt wird, an der eine automatische Kupplung (14) nicht rutscht, die aber in der Nähe einer Position liegt, bei der die automatische Kupplung (14) ausgekuppelt ist, wobei sich in dem Fahrzeug, das die automatische Kupplung (14) beinhaltet, die von dem Kupplungsantrieb (34) eingekuppelt und ausgekuppelt wird, die automatische Kupplung zwischen einem Verbrennungsmotor (12) und einem stufenlosen Getriebe der Parallelwellen-Bauweise (16) befindet, aufweisend:
ein Niedrigtemperaturzustandsbestimmungsmittel (178), das so konfiguriert ist, dass es bestimmt, ob sich der Verbrennungsmotor in einem vorgegebenen Niedrigtemperaturzustand befindet; und
ein Verbrennungsmotorantriebsdrehmomenterhöhungsmittel (180), das so konfiguriert ist, dass es ein Antriebsdrehmoment des Verbrennungsmotors erhöht, wenn das Niedrigtemperaturzustandsbestimmungsmittel bestimmt, dass sich der Verbrennungsmotor in dem Niedrigtemperaturzustand befindet, wenn das Standby-Steuermittel die Standby-Steuerung durchführt, wobei
das Verbrennungsmotorantriebsdrehmomenterhöhungsmittel in dem Niedrigtemperaturzustand das von dem Verbrennungsmotor abgegebene Drehmoment auf einen Wert erhöht, der einem Drehmoment gleicht, das von dem erwärmten Verbrennungsmotor abgegeben wird; und wobei
das Standby-Steuermittel die Betriebsposition, bei der das Ausgabeelement (92) des Kupplungsantriebs betrieben wird, wenn das Fahrzeug langsamer wird, unabhängig von einem Ausmaß, mit dem der Verbrennungsmotor erwärmt wurde, an der Standby-Position hält.

2. Steuereinrichtung für eine automatische Fahrzeugkupplung nach Anspruch 1, wobei
der Verbrennungsmotor ein Kraftstoffeinspritzventil beinhaltet, und
das Verbrennungsmotorantriebsdrehmomenterhöhungsmittel eine Kraftstoffmenge, die von dem Kraftstoffeinspritzventil aus dem Verbrennungsmotor zugeführt wird, auf einen Wert erhöht, der höher ist als ein Wert, der benötigt wird, um den Verbrennungsmotor im Leerlauf zu betreiben.

3. Steuereinrichtung für eine automatische Fahrzeugkupplung nach Anspruch 1, wobei
das Fahrzeug ein Drosselventil beinhaltet, und
das Verbrennungsmotorantriebsdrehmomenterhöhungsmittel einen Öffnungsgrad des Drosselventils in dem Niedrigtemperaturzustand auf einen Wert erhöht, der höher ist als ein Öffnungsgrad des Drosselventils, wenn der Verbrennungsmotor erwärmt ist.

4. Steuerverfahren für eine automatische Fahrzeugkupplung, die eine Standby-Steuerung durchführt, bei der eine Betriebsposition, bei der ein Ausgabeelement (92) eines Kupplungsantriebs (34) betrieben wird, wenn ein Fahrzeug langsamer wird, auf eine Standby-Position eingestellt wird, bei der eine automatische Kupplung (14) nicht rutscht, die aber in der Nähe einer Position liegt, bei der die automatische Kupplung ausgekuppelt ist, wobei sich in dem Fahrzeug, das die automatische Kupplung (14) beinhaltet, die von dem Kupplungsantrieb (34) eingekuppelt und ausgekuppelt wird, die automatische Kupplung zwischen einem Verbrennungsmotor (12) und einem stufenlosen Getriebe der Parallelwellen-Bauweise (16) befindet, wobei das Verfahren die folgenden Schritte aufweist:
Bestimmen, ob sich der Verbrennungsmotor in einem vorgegebenen Niedrigtemperaturzustand befindet; und
Erhöhen eines von dem Verbrennungsmotor abgegebenen Drehmoments, falls bestimmt wird, dass sich der Verbrennungsmotor in dem Niedrigtemperaturzustand befindet, wenn die Standby-Steuerung durchgeführt wird,
wobei
in dem Niedrigtemperaturzustand das von dem Verbrennungsmotor abgegebene Drehmoment auf einen Wert erhöht wird, der einem Drehmoment gleicht, das von dem erwärmten Verbrennungsmotor abgegeben wird; wobei das Verfahren ferner den folgenden Schritt aufweist:
Beibehalten der Betriebsposition, bei der das Ausgabeelement des Kupplungsantriebs betrieben wird, wenn das Fahrzeug langsamer wird, an der Standby-Position, unabhängig von einem Ausmaß, mit dem der Verbrennungsmotor erwärmt wurde.

## Revendications

1. Dispositif de commande (116) pour un embrayage automatique de véhicule, comportant un moyen de commande d'attente (176) configuré pour effectuer une commande d'attente dans laquelle une position de fonctionnement à laquelle un organe de sortie (92) d'un actionneur d'embrayage (34) est actionné lorsqu'un véhicule ralentit est mise à une position d'attente à laquelle un embrayage automatique (14) ne patine pas mais qui est proche d'une position à laquelle l'embrayage automatique (14) est désengagé, dans le véhicule qui comporte l'embrayage automatique (14) qui est engagé et désengagé par l'actionneur d'embrayage (34) et qui est prévu entre un moteur (12) et une transmission à engrènement constant de type à arbres parallèles (16), comprenant :
un moyen de détermination d'état à basse température (178) configuré pour déterminer si le moteur est dans un état à basse température prédéterminé ; et
un moyen pour augmenter le couple fourni par le moteur (180) configuré pour augmenter un couple fourni par le moteur si le moyen de détermination d'état à basse température détermine que le moteur est dans l'état à basse température lorsque le moyen de commande d'attente effectue la commande d'attente, où, pendant l'utilisation,
le moyen pour augmenter le couple fourni par le moteur augmente le couple fourni par le moteur dans l'état à basse température à une valeur égale à un couple fourni par le moteur chauffé ; et où, pendant l'utilisation,
le moyen de commande d'attente maintient la position de fonctionnement, à laquelle l'organe de sortie (92) de l'actionneur d'embrayage est actionné lorsque le véhicule ralentit, à la position d'attente indépendamment d'un degré auquel le moteur a été chauffé.

2. Dispositif de commande pour un embrayage automatique de véhicule selon la revendication 1, dans lequel
le moteur comporte une soupape d'injection de carburant et
le moyen pour augmenter le couple fourni par le moteur augmente une quantité de carburant fournie par la soupape d'injection de carburant au moteur à une valeur supérieure à une valeur requise pour faire tourner le moteur au ralenti.

3. Dispositif de commande pour un embrayage automatique de véhicule selon la revendication 1, dans lequel
le véhicule comporte une soupape d'étranglement et le moyen pour augmenter le couple fourni par le moteur augmente une quantité d'ouverture de la soupape d'étranglement dans l'état à basse température à une valeur supérieure à une quantité d'ouverture de la soupape d'étranglement lorsque le moteur a été chauffé.

4. Procédé de commande d'un embrayage automatique de véhicule qui effectue une commande d'attente dans laquelle une position de fonctionnement, à laquelle un organe de sortie (92) d'un actionneur d'embrayage (34) est actionné lorsqu'un véhicule ralentit est mise à une position d'attente à laquelle un embrayage automatique (14) ne patine pas mais qui est proche d'une position à laquelle l'embrayage automatique est désengagé, dans le véhicule qui comporte l'embrayage automatique (14) qui est engagé et désengagé par l'actionneur d'embrayage (34) et qui est prévu entre un moteur (12) et une transmission à engrènement constant de type à arbres parallèles (16), comprenant les étapes consistant à :
déterminer si le moteur est dans un état à basse température prédéterminé ; et
augmenter un couple fourni par le moteur s'il s'avère que le moteur est dans l'état à basse température lorsque la commande d'attente est effectuée,
le couple fourni par le moteur est augmenté dans l'état à basse température à une valeur égale à un couple fourni par le moteur qui a été chauffé ; le procédé comprenant en outre l'étape consistant à :
maintenir la position de fonctionnement à laquelle l'organe de sortie de l'actionneur d'embrayage est actionné lorsque le véhicule ralentit, à la position d'attente indépendamment d'un degré auquel le moteur a été chauffé.
